# EUROPEAN PATENT APPLICATION

(11) **EP 4 714 799 A1**
(43) Date of publication of application: **25.03.2026**
(21) Application number: 25203171.1
(22) Date of filing: 18.09.2025
(51) Int. Cl.: B62D 35/00, B62D 37/02

(54) **SIDE MIRROR AERODYNAMIC DEVICE**

(30) Priority: 20.09.2024 GB 202413894
(71) Applicant: McLaren Automotive Limited, Woking, Surrey GU21 4YH (GB)
(72) Inventor: Panagakos, Vasileios, Woking, GU21 4YH (GB); Algoo, Robin, Woking, GU21 4YH (GB)
(74) Representative: Slingsby Partners LLP

(57) **Abstract**

Disclosed is an aerodynamic device (210) for guiding airflow around a side mirror (200) of a vehicle (700), the device comprising: the side mirror comprising a mirror surface (201), a cover (202) and a support structure (203) for mounting the cover to the vehicle at a mounting zone (204); and an aerodynamic body (205) being movably attached to the side mirror, the aerodynamic body projecting from the side mirror, the aerodynamic body being actuatable between a first configuration and a second configuration, the first configuration of the aerodynamic body having a first angle of attack and the second configuration of the aerodynamic body having a second angle of attack, the first angle of attack being different to the second angle of attack.

## Description

This invention relates to an aerodynamic device for guiding airflow around a side mirror of a vehicle.

Vehicles comprise body panels for covering the internal parts of the vehicle. The body panels may be used to guide the incoming airflow over the vehicle. Additionally, further panels may be attached to the body panels to further guide the incoming airflow over the vehicle. Such panels which guide incoming airflow may be known as aerodynamic bodies. High performance vehicles, such as supercars, may have multiple aerodynamic bodies, with specific designs, to optimise the aerodynamics of the vehicle. The aerodynamic bodies may also be movable relative to one another and/or relative to the vehicle. The aerodynamic bodies may be fitted to different parts of the vehicle, such as the underside, the roof, the front and/or the rear of the vehicle.

Aerodynamic bodies may guide the incoming airflow so as to provide lift and/or downforce forces on the vehicle. This may be beneficial for increased vehicle speed, particularly in corners. Aerodynamic bodies may guide the incoming airflow so as to provide and/or reduce drag forces on the vehicle. This may be beneficial for reduced air resistance for increased vehicle speed, or increased air resistance for increased braking force. Aerodynamic bodies may guide the incoming airflow towards certain parts of the vehicle, such as air intakes used for cooling etc. It can be particularly advantageous to guide airflow down the sides of the vehicle, so as to provide a cooling flow such as to mid-engine radiator air intakes. Designing aerodynamic bodies to guide the airflow in a controlled and efficient manner can be challenging.

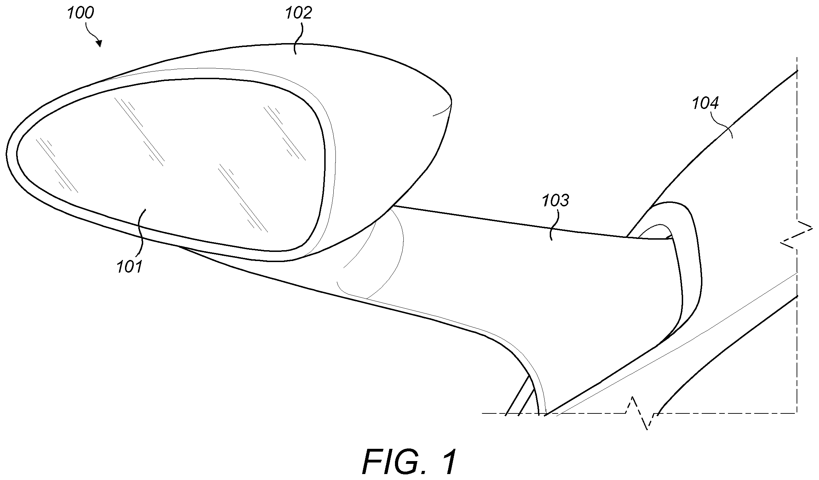

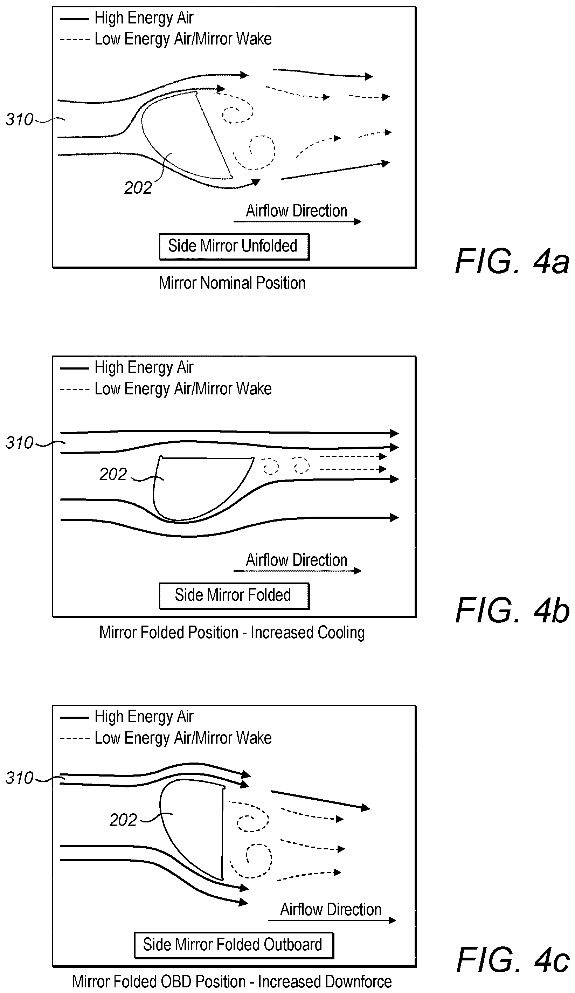

The airflow around the side mirrors of the vehicle can be inefficient. As airflow passes over and around the side mirrors, the airflow can become turbulent as passes rearwards of the side mirror. Figure 1 illustrates an example wheel side mirror 100 comprising a mirror surface 101, a cover 102 and a support structure 103 for attaching to the vehicle body 104. As the incoming airflow passes around the cover 102, the airflow may become turbulent, as illustrated in Figure 4a. The turbulent airflow behind the cover 102 can be difficult to control, can cause increased drag, and can cause interference with the aerodynamics on the side of the vehicle.

It is therefore desirable for improved aerodynamic devices which address the aforementioned problems.

According to a first aspect of the present invention there is provided an aerodynamic device for guiding airflow around a side mirror of a vehicle, the device comprising: the side mirror comprising a mirror surface, a cover and a support structure for mounting the cover to the vehicle at a mounting zone; and an aerodynamic body being movably attached to the side mirror, the aerodynamic body projecting from the side mirror, the aerodynamic body being actuatable between a first configuration and a second configuration, the first configuration of the aerodynamic body having a first angle of attack and the second configuration of the aerodynamic body having a second angle of attack, the first angle of attack being different to the second angle of attack.

In some implementations, the aerodynamic body may be attached to the cover.

In some implementations, the support structure may be attached to an inboard side of the cover and the aerodynamic body may be attached to the inboard side of the cover.

In some implementations, the aerodynamic body may project in a direction away from the cover towards the mounting zone of the support structure.

In some implementations, a longitudinal axis of the aerodynamic body may be parallel to a longitudinal axis of the support structure.

In some implementations, the first configuration of the aerodynamic body may have a first downforce and/or drag characteristic, and the second configuration of the aerodynamic body may have a second downforce and/or drag characteristic, the first downforce and/or drag characteristic may be different to the second downforce and/or drag characteristic.

In some implementations, the aerodynamic body may be rotatably attached to the side mirror at a joint, the joint permitting the aerodynamic body to rotate with respect to the side mirror about a rotation axis from the first configuration to the second configuration.

In some implementations, the aerodynamic body may not be directly attached to the vehicle.

In some implementations, the aerodynamic body may be directly rotatably attachable to the vehicle about a further joint, the further joint permitting the aerodynamic body to rotate with respect to the vehicle about the rotation axis from the first configuration to the second configuration.

In some implementations, the aerodynamic body may be actuatable between a third configuration and a fourth configuration, the third configuration of the aerodynamic body being a deployed configuration and the fourth configuration of the aerodynamic body being a retracted configuration.

In some implementations, the third configuration may be the same as the first configuration, the second configuration, or a configuration between the first configuration and the second configuration.

In some implementations, the aerodynamic body may be actuatable from the third configuration to the fourth configuration in a direction towards the cover.

In some implementations, when an incoming airflow is received by a front surface of the cover, in the third configuration the aerodynamic body may not be located behind of the cover with respect to the incoming airflow, and in the fourth configuration the aerodynamic body may be located at least partially behind the cover with respect to the incoming airflow.

In some implementations, when the incoming airflow is received by the front surface of the cover, in the fourth configuration the aerodynamic body may be located wholly behind the cover with respect to the incoming airflow.

In some implementations, the side mirror may comprise a cavity, the cavity being inside the cover and the mirror surface. In some implementations, in the third configuration the aerodynamic body may be located wholly outside of the cavity, and in the fourth configuration the aerodynamic body may be located at least partially inside the cavity.

In some implementations, in the fourth configuration the aerodynamic body may be located wholly inside the cavity.

In some implementations, the aerodynamic body may comprise one or more of: an aerofoil cross section, a planar shape, a planform shape, a fin shape, a wing shape, or a winglet shape.

In some implementations, the aerodynamic device may further comprise a driver, the driver being configured to drive the actuation of the aerodynamic body.

In some implementations, the cover may be movably attached to the support structure, the cover being actuatable between a fifth configuration and a sixth configuration, the fifth configuration being a normal configuration and the sixth configuration being a folded configuration.

In some implementations, the fifth configuration of the aerodynamic body may have a fifth downforce and/or drag characteristic, and the sixth configuration of the aerodynamic body may have a sixth downforce and/or drag characteristic, the fifth downforce and/or drag characteristic may be different to the sixth downforce and/or drag characteristic.

In some implementations, the cover may be rotatably attached to the support structure at a cover joint, the cover joint may permit the cover to rotate with respect to the support structure about a cover rotation axis from the fifth configuration to the sixth configuration.

In some implementations, the cover rotation axis may be perpendicular to the longitudinal axis of the support structure.

In some implementations, the aerodynamic device may comprise a plurality of aerodynamic bodies.

According to a second aspect of the present invention there is provided a vehicle comprising the aerodynamic device.

In some implementations, the vehicle may further comprise a further aerodynamic device, the aerodynamic device and the further aerodynamic device being configured for use on opposing sides of the vehicle respectively.

According to a third aspect of the present invention there is provided a control system configured to control the aerodynamic device, the control system being configured to control the actuation of the aerodynamic body from the first configuration to the second configuration.

According to a fourth aspect of the present invention there is provided a control system for controlling an aerodynamic device for guiding airflow around a side mirror of a vehicle, the device comprising: the side mirror comprising a mirror surface, a cover and a support structure for mounting the cover to the vehicle at a mounting zone; an aerodynamic body being movably attached to the side mirror, the aerodynamic body projecting from the side mirror; and a driver configured to drive the actuation of the aerodynamic body; the control system being configured to control the driver to actuate the aerodynamic body between a first configuration and a second configuration, the first configuration of the aerodynamic body having a first angle of attack and the second configuration of the aerodynamic body having a second angle of attack, the first angle of attack being different to the second angle of attack.

In some implementations, the control system may be configured to actuate the aerodynamic body between the first configuration and the second configuration in response to receiving a reconfiguration request.

In some implementations, the reconfiguration request may correspond to a road mode request, a track mode request, or a high-speed mode request.

In some implementations, the control system may be configured to adjust the actuation of the aerodynamic body in response to receiving driving data.

In some implementations, the driving data may comprise one or more of: telemetry data and user input data.

In some implementations, the control system may be configured to continuously adjust the actuation of the aerodynamic body.

The present invention will now be described by way of example with reference to the accompanying drawings. In the drawings:
Figure 1 schematically illustrates a prior art side mirror.
Figure 2 schematically illustrates an embodiment of an aerodynamic device for guiding airflow around a side mirror of a vehicle.
Figure 3a schematically illustrates the aerodynamic device with the aerodynamic body in a retracted configuration and the cover in a normal configuration. Figure 3b schematically illustrates the aerodynamic device with the aerodynamic body in a deployed configuration and the cover in a normal configuration. Figure 3c schematically illustrates the aerodynamic device with the aerodynamic body in a deployed configuration and the cover in a folded inboard configuration.
Figure 4a schematically illustrates the airflow around the aerodynamic device with the cover in a normal configuration. Figure 4b schematically illustrates the airflow around the aerodynamic device with the cover in a folded inboard configuration. Figure 4c schematically illustrates the airflow around the aerodynamic device with the cover in a folded outboard configuration.
Figure 5 schematically illustrates the airflow around the aerodynamic device to the rear radiator when the aerodynamic body is not fitted or deployed.
Figure 6 schematically illustrates the airflow around the aerodynamic device to the rear radiator when the aerodynamic body is fitted and deployed.
Figure 7 schematically illustrates a vehicle comprising two aerodynamic devices.
Figure 8 illustrates a flowchart of the control system for the aerodynamic device.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

This invention relates to an aerodynamic device for guiding airflow around a side mirror of a vehicle.

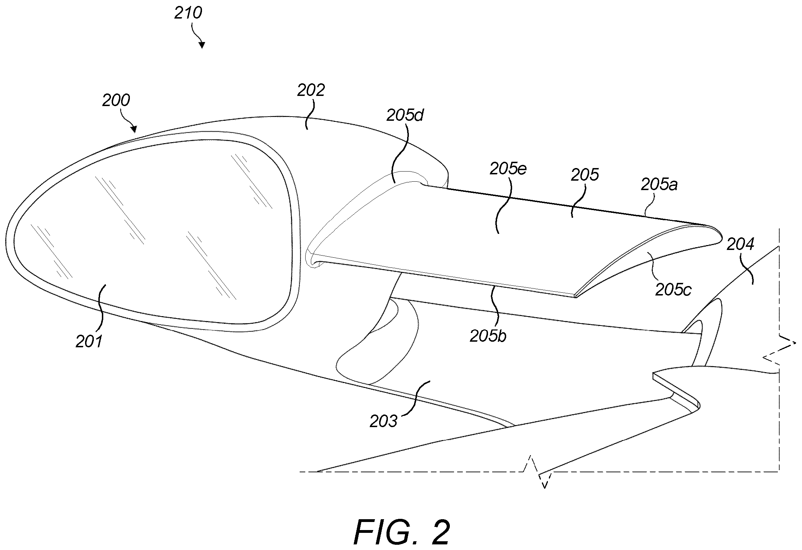

Figure 2 Illustrates an embodiment of an aerodynamic device 210 for guiding airflow around a side mirror 200 of a vehicle. The aerodynamic device 210 may comprise the side mirror 200.

The side mirror 200 may comprise a mirror surface 201. The mirror surface 201 may be the component of the side mirror 200 that provides the reflective properties. The mirror surface 201 may be formed by a pane of mirrored material. The mirror surface 201 may comprise glass.

The side mirror 200 may comprise a cover 202. The mirror surface 201 may be mounted to the cover 202. Alternatively, a surface of the cover 202 may provide the mirror surface 201. The side mirror 200 may comprise a cavity. The cavity may be defined by the cover 202 and optionally the mirror surface 201. The cover 202 and optionally the mirror surface 201 may define an interior volume of the side mirror 200. The interior volume may be the cavity. In the embodiment shown in Figure 2, the cover 202 generally forms a cup shape with an opening on the rearward side. The mirror surface 201 generally fills the opening on the rearward side of the cover 202.

The side mirror 200 may comprise a support structure 203. The support structure 203 may comprise a member, such as a strut. The member has a longitudinal axis. The support structure 203 may comprise a plurality of struts. The support structure 203 may allow the cover 202 to be mounted to the vehicle. The support structure 203 may be attachable to the vehicle. The support structure 203 may attach to the vehicle at a mounting zone. The mounting zone may be zone in which the support structure 202 contacts the vehicle. The mounting zone may comprise a plurality of sub-zones, for example if the support structure comprises a plurality of members. The support structure 203 may be fixedly attached to the vehicle. The support structure 203 may be attached to a side panel of the vehicle. The support structure 203 may be attached to the chassis of the vehicle. If the vehicle comprises a monocoque chassis, the support structure 203 may be attached to the monocoque chassis. The support structure 203 may be directly attached to the vehicle. The support structure 203 may be attached to the cover 202. The support structure 203 may be attached to an inboard side of the cover 202. The support structure 203 may be attached to cover 202 at one end and attached to the vehicle at another end.

The aerodynamic device 210 may comprise an aerodynamic body 205. The aerodynamic body 205 may be arranged to guide the airflow around the side mirror 200. The aerodynamic device 210 may be arranged to guide the airflow down the side of the vehicle. The aerodynamic device 210 may be arranged to guide the airflow into a cooling inlet. The vehicle may comprise an engine cooling inlet on the side of the vehicle. The aerodynamic device 210 may be arranged to guide the airflow into the engine cooling inlet. The aerodynamic device 210 may be arranged to guide the airflow towards a further aerodynamic device, such as a rear wing.

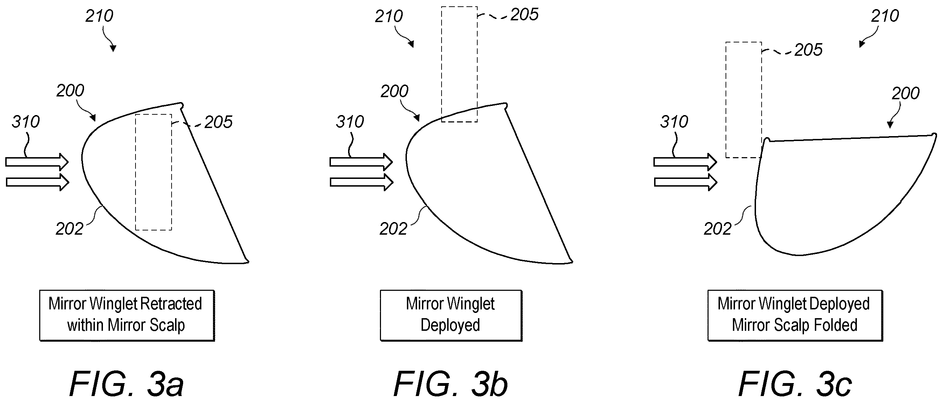

As shown in Figures 3a to 6, the aerodynamic device 210 may receive an incoming airflow 310. The incoming airflow 310 may be a result of the vehicle, on which the aerodynamic device 210 is fitted, travelling at a certain velocity. The incoming airflow 310 may have the same velocity as the vehicle. The incoming airflow 310 may have a higher or lower velocity than the vehicle proximal to the aerodynamic device 310 due to local velocity changes, such as from body panels, the side mirror 200 and/or the aerodynamic body 205.

The aerodynamic body 205 may thus impart a force on the incoming airflow 310. The aerodynamic body 205 may guide the airflow through around the side mirror 200. The aerodynamic body 205 may be arranged to redirect the wake of the mirror. The airflow with the aerodynamic body 205 may be more efficiently directed than the airflow without the aerodynamic body 205.

The locations of the aerodynamic body 205 may be described with reference to a deployed configuration of the aerodynamic body 205. The aerodynamic body 205 may be located, in a deployed configuration, with respect to the wing mirror 200, in an optimum location for guiding the airflow around the side mirror 200 efficiently. The aerodynamic body 205 may be located inboard of the side mirror 200, with respect to the vehicle. Alternatively, or in addition, the aerodynamic body 205 may be located outboard of the side mirror 200, with respect to the vehicle.

The aerodynamic body 205 may be attached to the side mirror 210. The aerodynamic body 205 may be attached to the cover 202 of the side mirror 210. The aerodynamic body 205 may project from the side mirror 210. The aerodynamic body 205 may project from the cover 202. The structure of the aerodynamic body 205 may extend in a direction away from the cover 202. The aerodynamic body 205 may project in a direction towards the vehicle. The aerodynamic body 205 may project in a direction towards the mounting zone. The aerodynamic body 205 may be attached to an inboard side of the cover 202, with respect to the vehicle. The aerodynamic body 205 may extend inboard from the cover 202. In this way, the aerodynamic body 205 may guide the airflow inboard of the cover 202. The aerodynamic body 205 may extend part of the way between the cover 202 and the vehicle. The aerodynamic body 205 may not be directly attached to the vehicle. Alternatively, the aerodynamic body may extend the whole way between the cover 202 and the vehicle 202. The aerodynamic body 205 may sit flush with the vehicle, such as the outer panel of the vehicle. The aerodynamic body 205 may be directly attachable or attached to the vehicle.

A longitudinal axis of the aerodynamic body 205 may be parallel to a longitudinal axis of the support structure 203. The aerodynamic body 205 may extend away from the cover 202. The longitudinal axis of the aerodynamic body 205 may be the direction that the aerodynamic body 205 extends in. The longitudinal axis of the aerodynamic body 205 may be the direction that the aerodynamic body 205 predominantly extends in. The aerodynamic body 205 may be elongate, and the longitudinal axis of the aerodynamic body 205 may be the direction along the longer dimension of the aerodynamic body 205. The support structure 203 may extend between the cover 202 and the vehicle. The longitudinal axis of the support structure 203 may be the direction that the support structure 203 extends in. The longitudinal axis of the aerodynamic body 205 may be parallel to the longitudinal axis of the support structure 203 in the vertical plane, and/or the horizontal plane, with respect to the vehicle. In this way, the guiding of the airflow between the support structure 203 and the aerodynamic body 205 may be generally constant along the length of the aerodynamic body 205. Alternatively, the longitudinal axis of the aerodynamic body 205 may be angled to the longitudinal axis of the support structure 203. For example, the longitudinal axis of the aerodynamic body 205 may be angled upwards towards the outboard end with respect to the longitudinal axis of the support structure 203
When the vehicle is on a flat horizontal surface, the longitudinal axis of the aerodynamic body 205 may be horizontal. When the vehicle is on a flat horizontal surface, the longitudinal axis of the support structure 203 may be horizontal. In this way, the guiding of the airflow by the aerodynamic body 205 may be generally constant along the length of the aerodynamic body 205. Alternatively, the longitudinal axis of the aerodynamic body 205 and/or the longitudinal axis of the support structure 203 may be at an angle to the horizontal.

As shown in Figure 2, the longitudinal axis of the aerodynamic body 205 may be spaced from the longitudinal axis of the support structure 203. The longitudinal axis of the aerodynamic body 205 may be spaced from the longitudinal axis of the support structure 203 vertically, and/or horizontally, with respect to the vehicle. The arrangement of the longitudinal axes can be adapted depending on the airflow guiding requirements.

The aerodynamic body 205 may be spaced from the support structure 202. The outer surface of the aerodynamic body 205 may be spaced from the outer surface of the support structure 202. The incoming airflow 310 may be divided into a first airflow through a first passage and a second airflow through a second passage. The first airflow may be on a first side of the aerodynamic body 205. The first side of the aerodynamic body 205 may be the upper side of the aerodynamic body 205 with respect to the vehicle. The second airflow may be on a second side of the aerodynamic body 205. The second side of the aerodynamic body 205 may be the lower side of the aerodynamic body 205 with respect to the vehicle. The aerodynamic body 205 may split the incoming airflow 310 into separate streamlines defined by the first and second airflows. By dividing the incoming airflow 310, the first and second airflows may pass over the upper side and under the lower side of the aerodynamic body 205. In this way, the higher energy flow around the vehicle may be guided around the side mirror 200 to better control the mirror wake towards the rear of the vehicle.

The aerodynamic body 205 may be movably attached to the side mirror 210. The aerodynamic body 205 may be movably attached to the cover 202. The aerodynamic body 205 may be movable relative to the side mirror 210. The aerodynamic body 205 may be actuatable between a first configuration and a second configuration. For example, the aerodynamic body 205 may rotate and/or translate to a new position. The aerodynamic body 205 may also revert to the previous position.

The first configuration and the second configuration of the aerodynamic body 205 may result in different angles of attack. The first configuration has a first angle of attack. The second configuration has a second angle of attack. The first angle of attack may be different to the second angle of attack. The angle of attack may be with respect to the incoming airflow 310. The angle of attack may be with respect to the incoming airflow 310 arriving at a front surface of the cover 202. For example, if the vehicle is travelling forward on a flat and horizontal surface, the incoming airflow 310 may be generally parallel to the direction of travel and parallel to the flat and horizontal surface. The incoming airflow 310 may be received by the device at the front surface of the cover 202. Alternatively, if the incoming airflow 310 is from a different direction, such as partly from the side during cornering, the angle of attack may be with respect to that direction. In which case, the angles of attack of each of the first and second configurations may be different with respect to the different direction of the incoming airflow 310.

If the movement of the aerodynamic body 205 is rotational, then this may change the angle of attack of the aerodynamic body 205. For example, if the aerodynamic body 205 rotates upwards, then the angle of attack of the aerodynamic body 205 may increase. This may direct the airflow beyond the aerodynamic body 205 downwards. Alternatively, if the aerodynamic body 205 rotates downwards, then the angle of attack of the aerodynamic body 205 may decrease. This may direct the airflow beyond the aerodynamic body 205 upwards.

If the movement of the aerodynamic body 205 is a displacement, then this may also change the angle of attack of the aerodynamic body 205. For example, if the aerodynamic body 205 displaces at an angle to the incoming flow 310, then the angle of attack of the aerodynamic body 205 may change. The incoming airflow 310 may be at a different angle in different locations, and so changing the location of the aerodynamic body 205 may change the angle of attack with respect to the incoming flow 310.

The movement of the aerodynamic body 205 from the first configuration to the second configuration may also be a combination of rotation and displacement.

The first configuration of the aerodynamic body 205 may have a first downforce and/or drag characteristic and the second configuration of the aerodynamic body 205 may have a second downforce and/or drag characteristic. The first downforce and/or drag characteristic may be different to the second downforce and/or drag characteristic. For example, if the second configuration has a higher angle of attack than the first configuration, then the second configuration may have a higher lift characteristic and a higher drag characteristic. Similarly, the first configuration may have a higher downforce characteristic and a lower drag characteristic.

The configurations may be set depending on the lift/downforce/drag requirements. For example, high downforce and low drag may be useful for cornering. Low downforce and low drag may be useful for high-speed straights. High downforce and high drag may be useful for braking.

The aerodynamic body 205 may be actuatable to positions in between the first configuration and the second configuration. The aerodynamic body 205 may be continuously actuatable. The aerodynamic body 205 may be actuatable to any position between the first and second configurations. The aerodynamic body 205 may be actuatable to different configurations, which may be beyond the first and second configurations. The different configurations may comprise different angles of attack.

The aerodynamic body 205 may be rotatably attached to the side mirror 200. The aerodynamic body 205 may be rotatably attached to the cover 202. The aerodynamic body 205 may be rotatably attached to the cover 202 at a joint. The joint may permit the aerodynamic body 205 to rotate relative to the side mirror 200 about a rotation axis. The aerodynamic body 205 may rotate relative to the side mirror 200 about the rotation axis between the first configuration and the second configuration.

The rotation axis may be the longitudinal axis of the aerodynamic body 205. In this way, the aerodynamic body 205 may rotate about its predominant extension. This may allow the aerodynamic body 205 to rotate about an axis generally perpendicular to the incoming flow. Alternatively, the rotation axis may be different to the longitudinal axis of the aerodynamic body 205. For example, rotation axis may be parallel to, but spaced from, the longitudinal axis of the aerodynamic body 205. In this way, the aerodynamic body 205 may still rotate about an axis generally perpendicular to the incoming flow, but displaced from the longitudinal axis, such as an axis through the front or rear of the aerodynamic body 205. These configurations may control the airflow generally in line with the direction of the incoming airflow 310. Alternatively, the rotation axis may be at an angle to the longitudinal axis of the aerodynamic body 205. In this way, the aerodynamic body 205 may rotate about an axis at an angle from perpendicular to the incoming airflow 310. This configuration may control the airflow generally at an angle to the direction of the incoming airflow 310.

The aerodynamic body 205 may be actively actuatable. The aerodynamic body 205 may be driven. The aerodynamic body 205 may be driven between the first configuration and the second configuration. The aerodynamic system 210 may comprise a driver. The driver may be a motor and/or an actuator. The driver may actuate the aerodynamic body 205. The driver may drive the aerodynamic body 205 to rotate about the joint.

The aerodynamic body 205 may be directly attachable to the vehicle. The aerodynamic body 205 may be rotatably attachable to the vehicle. The aerodynamic body 205 may be rotatably attachable to the vehicle about a further joint. The further joint may permit the aerodynamic body 205 to rotate relative to the vehicle about the rotation axis. The aerodynamic body 205 may rotate relative to the vehicle about the rotation axis between the first configuration and the second configuration.

Figure 2 shows a single aerodynamic body 205. That said, the aerodynamic device 210 may comprise a plurality of aerodynamic bodies 205. The number of aerodynamic bodies 205 may be dependent on the airflow guiding requirements for the aerodynamic device 210. The aerodynamic bodies 205 may be discrete. The aerodynamic bodies 205 may be separate from one another. The aerodynamic bodies 205 may be independent from one another. The aerodynamic bodies 205 may not be directly attached to one another. Although, the aerodynamic bodies 205 may be indirectly attached to one another via an intermediate component which is not one of the aerodynamic bodies 205. The aerodynamic bodies 205 may provide independent airflow guidance. Further aerodynamic bodies 205 may be located on different parts of the cover 202 and/or vehicle. For example, a further aerodynamic body 205 may be located on the inboard side of the cover 202. Alternatively, or in addition, a further aerodynamic body 205 may be located on the outboard side of the cover 202, on top of the cover 202, or on the bottom of the cover 202.

The aerodynamic body 205 may comprise a leading edge 205a, a trailing edge 205b, an inboard edge 205c and an outboard edge 205d. An aerodynamic surface 205e may extend between the edges 205a, 205b, 205c, 205d of the aerodynamic body 205. The aerodynamic surface 205e may comprise an upper side and a lower side, with respect to the vehicle. In the case of a non-rectangular aerodynamic body 205, the edges 205a, 205b, 205c, 205d may be defined by the distal most points of the aerodynamic body 205. The leading edge 205a may be the forward-most point of the aerodynamic body 205, with respect to the vehicle. The trailing edge 205b may be the rearward-most point of the aerodynamic body 205, with respect to the vehicle. The inboard edge 205c may be the inboard-most point of the aerodynamic body 205, with respect to the vehicle. The outboard edge 205d may be the outboard-most point of the aerodynamic body 205, with respect to the vehicle.

The aerodynamic body 205 may comprise a generally square or rectangular plan shape when viewed from above. The aerodynamic body 205 may comprise an aerofoil cross section when viewed from the side. In this way, the aerodynamic body 205 may guide the airflow downwards of the vehicle and around the side mirror 200. The aerofoil cross section may comprise non-zero chamber. This may provide a bias towards guiding the airflow in a certain direction. The aerodynamic body 205 may comprise a planar shape. In other words, the aerodynamic body 205 may be much deeper and/or wider than it is thick. This may provide a large area for guiding the airflow. The aerodynamic body 205 may comprise a thin sheet. In other words, the aerodynamic body 205 may generally form a flat surface. This may be simpler to manufacture. The aerodynamic body 202 may comprise a planform shape. In other words, when viewed from above, the aerodynamic body 202 may taper towards the outboard edges. The aerodynamic body 202 may comprise a fin, wing, or splitter.

The incoming airflow 310 may first be received by the aerodynamic device 210. The airflow may be guided over the upper and lower sides of the aerodynamic body 205. The majority of the airflow over the aerodynamic body 205 may be guided from the leading edge 205a, over the upper and lower sides of the surface 205e, to the trailing edge 205b.

However, some of the airflow over the aerodynamic body 205 may fall off inboard and/or outboard sides 205c, 205d of the aerodynamic body 205. The airflow may fall upwards or downwards depending on the attack angle of the aerodynamic body 205. The airflow falling off the inboard and/or outboard edges 205c, 205d may form vortices. The vortices may continue to travel down the inboard and/or outboard edges 205c, 205d of the aerodynamic body 205 and beyond the aerodynamic body 205. The vortices may improve the airflow beyond the aerodynamic body 205.

The aerodynamic body 205, the cover 202 and/or the support structure 203 may be made from a metallic material and/or a composite material. The composite material may comprise one or more of: Metal Matrix Composites (MMCs), Polymer Matrix Composites (PMCs), Glass Fiber Reinforced Polymers (GFRPs), and Carbon Fiber Reinforced Polymers (CFRPs).

As described herein, the aerodynamic body 205 may be movably attached to the side mirror 210. The aerodynamic body 205 may be movably attached to the cover 202. The aerodynamic body 205 may be movable relative to the side mirror 210. The aerodynamic body may be actuatable between a third configuration and a fourth configuration. For example, the aerodynamic body 205 may rotate and/or translate to a new position. The aerodynamic body 205 may also revert to the previous position.

The third configuration and the fourth configuration of the aerodynamic body 205 may provide different impacts on the guidance of the incoming airflow 310. The third configuration may be a deployed configuration. The fourth configuration may be a retracted configuration. The deployed and retracted configurations may have the aerodynamic body 205 in different positions and/or orientations. The third configuration may be the same as the first configuration, the second configuration, or a configuration between the first configuration and the second configuration.

The aerodynamic body 205 may be actuatable towards the cover 202 from the third configuration the fourth configuration. In other words, the aerodynamic body 205 may move towards the cover 202 to the retracted. The aerodynamic body 205 may move away from the cover 202 to be deployed.

In the third configuration, when an incoming airflow is received by the front surface of the cover202, the aerodynamic body 205 may not be located behind the cover 202. Put another way, in the third configuration, when the vehicle is in forward motion, the aerodynamic body 205 may not be located behind the cover 202 with respect to the incoming flow 301. In this way, in the deployed configuration, the aerodynamic body 205 may provide guidance to the incoming flow 310 as it is not blocked by the cover 202.

In the fourth configuration, when the incoming airflow is received by the front surface of the cover 202, the aerodynamic body 205 may be at least partially located behind the cover 202 with respect to the incoming flow 301. Put another way, in the fourth configuration, when the vehicle is in forward motion, the aerodynamic body 205 may be at least partially located behind the cover 202 with respect to the incoming flow 301. In this way, in the retracted configuration, the aerodynamic body 205 may provide minimal guidance to the incoming flow 310 as it is at least partially blocked by the cover 202. Preferably, in the fourth configuration, when the vehicle is in forward motion, the aerodynamic body 205 may be wholly located behind the cover 202 with respect to the incoming flow 301. In this way, in the retracted configuration, the aerodynamic body 205 may provide no guidance to the incoming flow 310 as it is wholly blocked by the cover 202.

As described herein, the side mirror 200 may comprise a cavity defined by the cover 202 and optionally the mirror surface 201. In the third configuration, the aerodynamic body 205 may be wholly located outside of the cavity. In this way, in the deployed configuration, the aerodynamic body 205 may provide guidance to the incoming flow 310 as it is not blocked by the cover 202.

In the fourth configuration, the aerodynamic body 205 may be at least partially located in the cavity. In this way, in the retracted configuration, the aerodynamic body 205 may provide minimal guidance to the incoming flow 310 as it is at least partially blocked by the cover 202. Preferably, in the fourth configuration, the aerodynamic body 205 may be wholly located in the cavity. In this way, in the retracted configuration, the aerodynamic body 205 may provide no guidance to the incoming flow 310 as it is wholly blocked by the cover 202.

The cover 202 may comprise a further opening. The aerodynamic body 205 may pass through the further opening when moving between the third configuration and the fourth configuration. The further opening may have a tight fit around the aerodynamic body 205 so as to reduce airflow leaking into the cover 202. The further opening may comprise a seal around the aerodynamic body 205 so as to reduce airflow leaking into the cover 202.

Alternatively, the aerodynamic body 205 may simply pass behind the cover 202 when moving between the third configuration and the fourth configuration. The cover may block the airflow to the aerodynamic body 205.

If the movement of the aerodynamic body 205 is rotational, then the aerodynamic body 205 may rotate towards the cover 202 for retraction and away from the cover 202 for deployment. If the movement of the aerodynamic body 205 is a displacement, then the aerodynamic body may translate towards the cover 202 for retraction and away from the cover 202 for deployment. For example. The aerodynamic body 205 may move between the third configuration and the fourth configuration along its longitudinal axis. This may reduce the size any further opening in the cover 202. The movement of the aerodynamic body 205 from the third configuration to the fourth configuration may also be a combination of rotation and displacement. For example. The aerodynamic body 205 may both rotate and displace when moving between the retracted and deployed configurations.

The aerodynamic body 205 may be actively actuatable. The aerodynamic body 205 may be driven. The aerodynamic body 205 may be driven between the third configuration and the fourth configuration. The aerodynamic system 210 may comprise a further driver. The further driver may be a motor and/or an actuator. The further driver may actuate the aerodynamic body 205. The further driver may drive the aerodynamic body 205 to be deployed or retracted. The driver and the further driver may be independent units or the same unit.

The cover 202 may be movably attached to the support structure 203. The cover 202 may be movable relative to the support structure 203. The cover 202 may be actuatable between a fifth configuration and a sixth configuration. For example, the cover 202 may rotate and/or translate to a new position. The cover 202 may also revert to the previous position.

The fifth configuration and the sixth configuration of the aerodynamic body 205 may result in different angles of attack. The fifth configuration has a fifth angle of attack. The sixth configuration has a sixth angle of attack. The fifth angle of attack may be different to the sixth angle of attack. The angle of attack may be with respect to the incoming airflow 310. The angle of attack may be with respect to the incoming airflow 310 arriving at a front surface of the cover202. For example, if the vehicle is travelling forward on a flat and horizontal surface, the incoming airflow 310 may be generally parallel to the direction of travel and parallel to the flat and horizontal surface. The incoming airflow 310 may be received by the device at the front surface of the cover202. Alternatively, if the incoming airflow 310 is from a different direction, such as partly from the side during cornering, the angle of attack may be with respect to that direction. In which case, the angles of attack of each of the fifth and sixth configurations may be different with respect to the different direction of the incoming airflow 310.

If the movement of the cover 202 is rotational, then this may change the angle of attack of the cover 202. For example, if the cover 202 rotates inboard or outboard, then the angle of attack of the cover 202 may change. This may direct the airflow inboard or outboard of the cover 202, depending on the arrangement of the cover 202 with respect to the incoming flow 310.

If the movement of the cover 202 is a displacement, then this may also change the angle of attack of the cover 202. For example, if the cover 202 displaces at an angle to the incoming flow 310, then the angle of attack of the cover 202 may change. The incoming airflow 310 may be at a different angle in different locations, and so changing the location of the cover 202 may change the angle of attack with respect to the incoming flow 310.

The movement of the cover 202 from the fifth configuration to the sixth configuration may also be a combination of rotation and displacement.

As the aerodynamic body 205 may be attached to the cover 202, movement of the cover 202 may also influence the angle of attack of the aerodynamic body 205. For example, if the cover 202 rotates inboard or outboard, this may change the angle at which the incoming airflow 310 is received by the aerodynamic body 205. This in turn may change the angle of attack of the aerodynamic body 205 without necessarily needing to directly actuate the aerodynamic body 205.

The fifth configuration of the cover 202 may have a fifth downforce and/or drag characteristic and the sixth configuration of the cover 202 may have a sixth downforce, horizontal redirection, and/or drag characteristic. The fifth downforce, horizontal redirection, and/or drag characteristic may be different to the sixth downforce, horizontal redirection, and/or drag characteristic. For example, if the sixth configuration has a higher angle of attack than the fifth configuration, then the sixth configuration may have a higher horizontal lift redirection characteristic and a higher drag characteristic. Similarly, the fifth configuration may have a lower horizontal redirection characteristic and a lower drag characteristic.

The configurations may be set depending on the lift/downforce/drag requirements. For example, high downforce and low drag may be useful for cornering. Low downforce and low drag may be useful for high-speed straights. High downforce and high drag may be useful for braking. Lift may be provided by pushing the airflow downwards. Downforce may be provided by pushing the airflow upwards. Drag reduction may be provided by managing the mirror wake efficiently.

The cover 202 may be actuatable to positions in between the fifth configuration and the sixth configuration. The cover 202 may be continuously actuatable. The cover 202 may be actuatable to any position between the fifth and sixth configurations. The cover 202 may be actuatable to different configurations, which may be beyond the fifth and sixth configurations. The different configurations may comprise different angles-of

The cover 202 may be rotatably attached to the support structure 203. The cover 202 may be rotatably attached to the support structure. The cover 202 may be rotatably attached to the support structure at a cover joint. The cover joint may permit the cover 202 to rotate relative to the support structure 203 about a cover rotation axis. The cover 202 may rotate relative to the side mirror 200 about the cover rotation axis between the fifth configuration and the sixth configuration.

The cover 202 may be actively actuatable. The cover 202 may be driven. The cover 202 may be driven between the fifth configuration and the sixth configuration. The aerodynamic system 210 may comprise a cover driver. The cover driver may be a motor and/or an actuator. The cover driver may actuate the cover 202. The cover driver may drive the cover 202 to rotate about the cover joint. The driver, the further driver, and the cover driver may be independent units or the same unit.

When the vehicle is on a horizontal flat surface, the cover rotation axis may be vertical. The cover rotation axis and the longitudinal axis of the support structure 203 may be perpendicular. In this way, the cover 202 may rotate purely inboard and outboard of the vehicle. The cover rotation axis and the longitudinal axis of the support structure 203 may intersect. Alternatively, the cover rotation axis may not be vertical and/or not be perpendicular to the longitudinal axis of the support structure 103. For example, the cover rotation axis may be at an angle to the longitudinal axis of the support structure 103. In this way, the cover 202 may rotate inboard and outboard of the vehicle as well as vertically up and down.

The mirror surface 201 may be fixedly attached to the cover 202. In this way, at the cover 202, the mirror surface 201 may collectively move with the cover 202.

Figures 3a to 3b show the aerodynamic device 210 in different configurations. A combination of the configurations shown in Figures 3a to 3b may be possible.

Figure 3a shows the aerodynamic body 205 in a retracted configuration and the cover 202 in a normal configuration. In the retracted configuration, the aerodynamic body 205 may be shielded from the incoming airflow 310 by the cover 202. The aerodynamic body 205 may not impart any guidance on the incoming airflow 310. The aerodynamic body 205 may be stored inside of the cover 202. In the normal configuration, the cover 202 may be in a neutral position. This may be the normal operating configuration. The cover 202 may be in a position which provides optimal positioning of the mirror surface 201 to the driver. The cover 202 may impart guidance on the incoming airflow 310. The cover 202 may be configured to direct the incoming airflow 310 outboard in the normal configuration. The cover 202 shown in Figure 2 comprises an asymmetrical shape. In particular, an asymmetrical D-shape. The asymmetry of the cover 202 may direct the incoming airflow 310 outboard when the cover 202 is in the normal configuration. This configuration of the aerodynamic device 210 may be used as a road mode. The road mode may not require high speed or high guidance on the incoming airflow 310, and so retracting the aerodynamic body 205 is suitable. The road mode may require the mirror surface 201 to be visible to the driver, and so the normal configuration of the cover 202 may be required.

Figure 3b shows the aerodynamic body 205 in a deployed configuration and the cover 202 in a normal configuration. In the deployed configuration, the aerodynamic body 205 may not be shielded from the incoming airflow 310 by the cover 202. The aerodynamic body 205 may be positioned outside of the cover 202. The aerodynamic body may receive the incoming airflow 310. The aerodynamic body 205 may impart guidance on the incoming airflow 310. In the normal configuration, the cover 202 may be in a neutral position. The cover 202 may be in a position which provides optimal positioning of the mirror surface 201 to the driver. The cover 202 may impart guidance on the incoming airflow 310. The cover 202 may be configured to direct the incoming airflow 310 outboard in the normal configuration. The cover 202 shown in Figure 2 comprises an asymmetrical shape. In particular, an asymmetrical D-shape. The asymmetry of the cover 202 may direct the incoming airflow 310 outboard when the cover 202 is in the normal configuration. This configuration of the aerodynamic device 210 may be used as a track mode. The track mode may require high guidance on the incoming airflow 310, and so deploying the aerodynamic body 205 and having the cover 202 in the normal configuration may be suitable. The track mode may still require the mirror surface 201 to be visible to the driver, and so the normal configuration of the cover 202 may be required.

Figure 3c shows the aerodynamic body 205 in a deployed configuration and the cover 202 in a folded inboard configuration. In the deployed configuration, the aerodynamic body 205 may not be shielded from the incoming airflow 310 by the cover 202. The aerodynamic body 205 may be positioned outside of the cover 202. The aerodynamic body may receive the incoming airflow 310. The aerodynamic body 205 may impart guidance on the incoming airflow 310. In the folded inboard configuration, the cover 202 may be in a sideways position. The cover 202 may be in a position which provides minimal resistance on the incoming airflow 310. The cover 202 may impart minimal guidance on the incoming airflow 310. The cover 202 may be configured to have minimal direction on the incoming airflow 310 outboard in the folded inboard configuration. The cover 202 shown in Figure 2 comprises an asymmetrical shape. In particular, an asymmetrical D-shape. The asymmetry of the cover 202 may have a lower drag characteristic when the cover 202 is in the folded inboard configuration. This configuration of the aerodynamic device 210 may be used as a high-speed mode. The high-speed mode may require high guidance on the incoming airflow 310 and low drag, and so deploying the aerodynamic body 205 and having the cover 202 in the folded configuration may be suitable. The high-speed mode may not require the mirror surface 201 to be visible to the driver, and so the folded inboard configuration of the cover 202 may be suitable.

Figures 4a to 4b show the cover 202 of the aerodynamic device 210 in different configurations and the effect on the incoming airflow 310.

Figure 4a shows the cover 202 in the normal configuration. In the normal configuration, the incoming airflow 310 is directed to either side of the cover 202. Due to the asymmetric shape of the cover 202, the incoming airflow 310 is predominantly directed outboard of the vehicle. There is a normal level of drag and mirror wake caused by the cover 202. The mirror wake is shown by the lower energy air rearwards of the cover 202, which produces the drag.

Figure 4b shows the cover 202 in the folded inboard configuration. In the folded inboard configuration, the incoming airflow 310 is directed to either side of the cover 202. Due to the asymmetric shape of the cover 202, the incoming airflow 310 is predominantly directed outboard of the vehicle, but this is a lower level of redirection than the normal configuration. Because of the smaller frontal area, and the flow remaining mostly attached to the mirror walls, there is a lower level of drag and mirror wake caused by the cover 202 than the normal configuration. The lower level of mirror wake is shown by the lower amount of lower energy air rearwards of the cover 202, which produces the lower drag.

Figure 4c shows the cover 202 in the folded outboard configuration. In the folded outboard configuration, the incoming airflow 310 is directed to either side of the cover 202. Due to the asymmetric shape of the cover 202, the incoming airflow 310 is predominantly directed outboard of the vehicle, but this is a higher level of redirection than the normal configuration. Because of the mirror wake being redirected away from the vehicle to an area where higher energy air would normally exist, there is a higher level of drag and mirror wake caused by the cover 202 than the normal configuration. The higher amount of mirror wake is shown by the higher amount of lower energy air rearwards of the cover 202, which produces the higher drag.

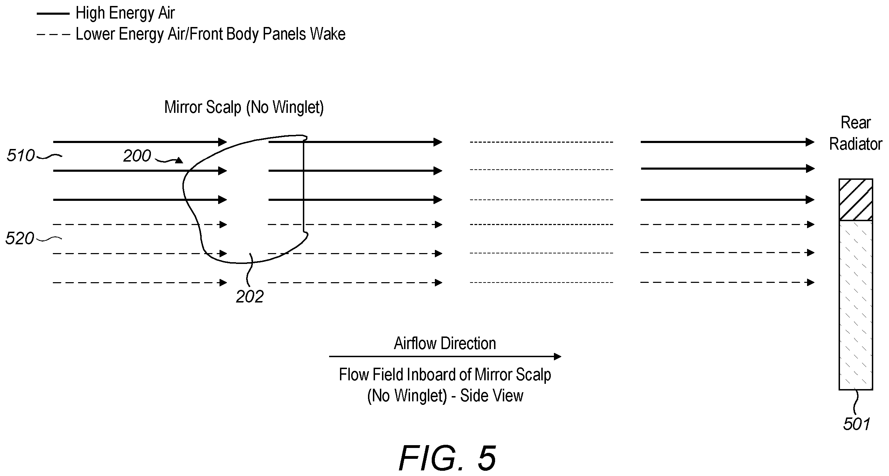

Figure 5 schematically illustrates the airflow 510, 520 around the aerodynamic device to the rear radiator 501 when the aerodynamic body 205 is not fitted or deployed. The aerodynamic body 205 may not be fitted to the aerodynamic device 200. Alternatively, the aerodynamic body 205 may be in the retracted configuration as shown in Figure 3a. The incoming airflow 510, 520 may comprise different types of airflow: high energy airflow 510, and lower energy airflow 520. The high energy airflow 510 may be from the free stream. The lower energy airflow 520 may be from the front body panels including the developed wake. The two types of airflow 510, 520 may pass over the cover 202 and be directed in the direction of the rear radiator 501. The cover 202 alone may not provide significant guidance to the airflow 510, 520. A significant portion of the airflow 510, may miss the rear radiator 501. In the example shown in Figure 5, a significant portion of the high energy airflow 510 (which may provide greater cooling than the low energy airflow 520) may miss the rear radiator 501. This may result in worse cooling of the rear radiator 501.

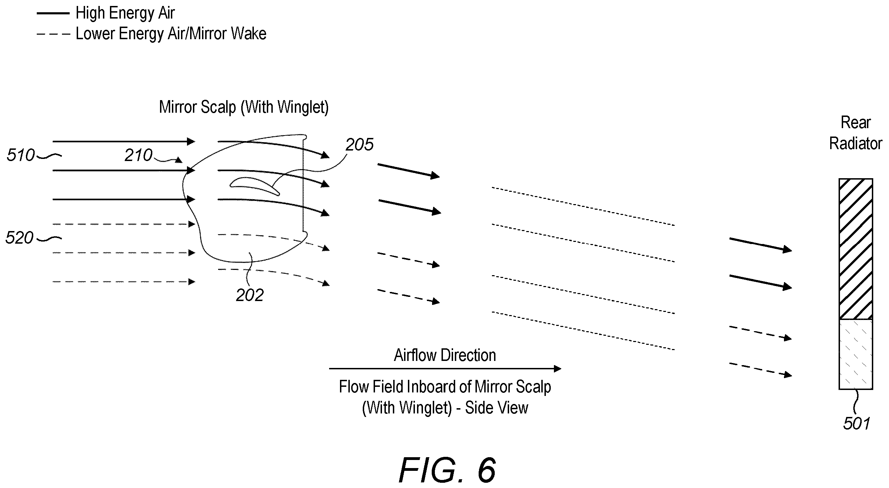

Figure 6 schematically illustrates the airflow 510, 520 around the aerodynamic device to the rear radiator 501 when the aerodynamic body 205 is fitted and deployed. The aerodynamic body 205 may be in the deployed configuration as shown in Figures 2, 3b and 3c. The incoming airflow 510, 520 may comprise different types of airflow: high energy airflow 510, and lower energy airflow 520. The high energy airflow 510 may be from the free stream. The lower energy airflow 520 may be from the front body panels including the developed wake. The two types of airflow 510, 520 may pass over the cover 202 and the aerodynamic body 205 and be directed in the direction of the rear radiator 501. The cover 202 in combination with the aerodynamic body 205 may provide greater guidance to the airflow 510, 520. A greater portion of the airflow 510, may be directed to the rear radiator 501. In the example shown in Figure 6, a significant portion of the high energy airflow 510 (which may provide greater cooling than the low energy airflow 520) may be directed to the rear radiator 501. This may result in better cooling of the rear radiator 501.

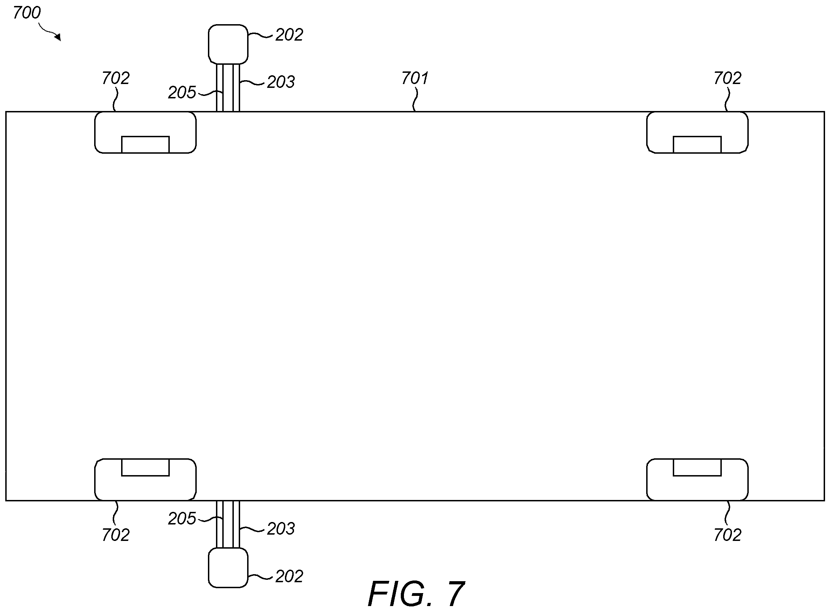

The aerodynamic device 210 described herein may be implemented on a vehicle, such as a car. In particular, the aerodynamic device 210 may be implemented on a sports car or racing car in which there are requirements for improved aerodynamics. A vehicle may comprise the aerodynamic device 210 described herein. Figure 7 illustrates the aerodynamic device 210 fitted to a vehicle 700.

Figure 7 shows an example vehicle 700 with the aerodynamic device 210 implemented. The vehicle 700 may comprise one or more aerodynamic devices 210.

The vehicle 700 may comprise a pair of front wheels 702. The vehicle 700 may comprise a pair of rear wheels 702. The pair of front wheels 702 and/or the pair of rear wheels 702 may be driven. The wheels 702 may be driven by a combustion engine and/or one or more electric motors. The wheels 702 may be located inboard of bodywork 701 of the vehicle 700. The bodywork 701 of the vehicle 700 may define the outer perimeter of the vehicle 700.

As shown in Figure 7, the aerodynamic device 210 may be located outboard of the bodywork 701. The vehicle 700 may comprise a plurality of aerodynamic devices 210. A first aerodynamic device 210 may be located on a first side of the vehicle and a second aerodynamic device 210 may be located on a second side of the vehicle (as shown in Figure 7). A first aerodynamic device 210 may be provided for the left-side mirror 200. A second aerodynamic device 210 may be provided for the right-side mirror 200.

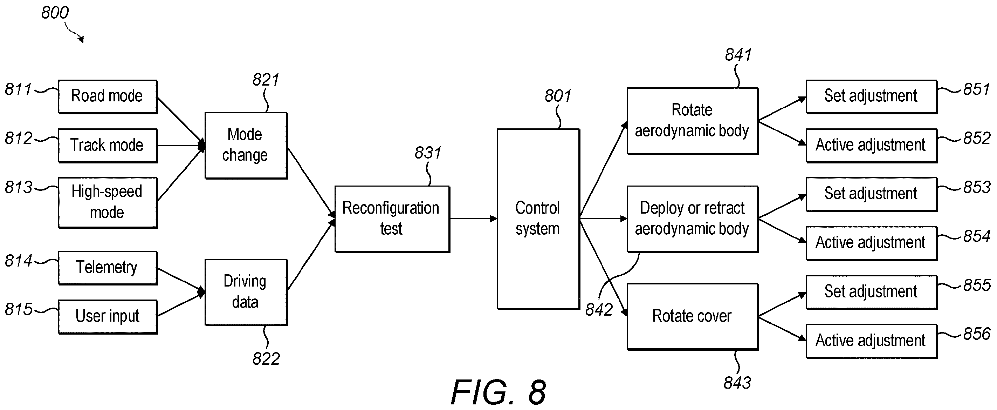

A control system 801 may be configured to control the aerodynamic device 210. The control system 801 may control the actuation of the aerodynamic body 205. The control system 801 may control the driver and/or further driver to drive the actuation of the aerodynamic body 205. The control system 801 may control the actuation of the aerodynamic body 205 between the first configuration and the second configuration. The control system 801 may control the actuation of the aerodynamic body 205 between the third configuration and the fourth configuration. The control system 801 may control the actuation of the cover 202. The control system 801 may control the cover driver to drive the actuation of the cover 202. The control system 801 may control the actuation of the cover 202 between the fifth configuration and the sixth configuration. Figure 8 illustrates an example procedure 800 of the control system 801.

The control system 801 may receive a reconfiguration request 831. In response to the reconfiguration request 831, the control system 801 may control the actuation of the aerodynamic body 205 and/or the cover 202. The reconfiguration request 831 may comprise a request for one or more of: the aerodynamic body 205 and/or the cover 202 to go into a set configuration; the aerodynamic body 205 and/or the cover 202 to be continually adjustable; and the aerodynamic body 205 and/or the cover 202 to periodically adjustable.

The reconfiguration request 831 may correspond to a mode change 821. The mode change 821 may request that the aerodynamic body 205 and/or the cover 202 be set in a certain configuration. The mode change 821 may include one or more of: a road mode 811, a track mode 812 and a high-speed mode 813. These modes may 811, 812, 813 may correspond to the modes described herein in relation to the configurations of the aerodynamic body 205 and/or the cover 202. Other modes may be possible. Alternatively, the mode change 821 may request that the aerodynamic body 205 and/or the cover 202 go into a continually adjustable mode or a periodically adjustable mode. The modes 811, 812, 813 may be selected by a user. The user may select the mode 811, 812, 813 through an input device, such as a button or touch screen.

The reconfiguration request 831 may correspond to driving data 822. The driving data 822 may request that the aerodynamic body 205 and/or the cover 202 be set in a certain configuration. Alternatively, the driving data 822 may request that the aerodynamic body 205 and/or the cover 202 go into a continually adjustable mode. The driving data 822 may include one or more of: telemetry 814, and user input 815. Other inputs may be possible. The telemetry 814 may be received from one or more sensors on the vehicle. For example, depending on the velocity, acceleration, braking, G-force etc of the vehicle, the actuation may be controlled. The user input 815 may be inputted by a user. The user may input through an input device, such as a button or touch screen. For example, the user may actively control the actuation, such as to fold in the wing mirrors.

Once the control system 801 has received the reconfiguration request 831, the control system 801 may control the actuation of the aerodynamic device 205 and/or the cover 202.

The control system 801 may control the rotation of the aerodynamic body 841. The rotation may adjust the angle of attack of the aerodynamic body 205. The rotation may be a set adjustment 851 to a certain configuration. For example, the first configuration and the second configuration. The rotation may be an active adjustment 852. For example, continuous or periodic actuating of the aerodynamic body 205 in response to telemetry 814 driving data 822 - e.g., adjusting angle of attack of the aerodynamic body 205 to different parts of the racetrack.

The control system 801 may control the deploy or retract of the aerodynamic body 842. The aerodynamic body 205 may be deployed or retracted. The deployed or retracted may be a set adjustment 853 to a certain configuration. For example, the third configuration and the fourth configuration. The deployed or retracted may be an active adjustment 854. For example, continuous or periodic variable deployment of the aerodynamic body 205 in response to telemetry 814 driving data 822 - e.g., adjusting the level of deployment of the aerodynamic body 205 for different racetracks.

The control system 801 may control the rotation of the cover 843. The rotation may adjust the angle of attack of the cover 202. The rotation may be a set adjustment 855 to a certain configuration. For example, the fifth configuration and the sixth configuration. The rotation may be an active adjustment 856. For example, continuous or periodic actuating of the cover 202 in response to telemetry 814 driving data 822 - e.g., adjusting angle of attack of the cover 202 to different parts of the racetrack.

The control unit 801 may be implemented by a computer. The control unit 801 may comprise a processor configured to process the datasets in the manner described herein. For example, the processor may be implemented as a computer program running on a programmable device such as a Central Processing Unit (CPU). The control unit 801 may comprise a memory which is arranged to communicate with the processor. Memory may be a non-volatile memory. The processor may also comprise a cache, which may be used to temporarily store data from memory. The control unit 801 may comprise more than one processor and more than one memory. The memory may store data that is executable by the processor. The processor may be configured to operate in accordance with a computer program stored in non-transitory form on a machine-readable storage medium. The computer program may store instructions for causing the processor to perform its methods in the manner described herein. The method steps described herein may be carried out by a computer-readable storage medium. The method steps described herein may be carried out by a computer program product.

The terms "vertical", "horizontal", "forward", "backward", "lower", "upper", "above", "below", "side", "length", "width", "inboard", and "outboard" used herein are used with respect to the forward driving direction of the vehicle 700, when the vehicle 700 is on a flat, level surface. For example, vertical may be a line normal to the floor of the vehicle 700. Horizontal may be a line parallel to the floor of the vehicle 700. Forward and backward may be directions along the horizontal line. Upper, lower, above, and below, may be positions along the vertical line. The length of the vehicle 700 may be measured between the front and rear of the vehicle 700. The width of the vehicle 700 may be measured between the sides of the vehicle. Inboard may be towards the centre of the vehicle along the horizontal line. Outboard may be towards the sides of the vehicle along the horizontal line.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description, it will be evident to a person skilled in the art that various modifications may be made within the scope of the invention.

### ANNEX

Some numbered statements are provided below, which form part of this disclosure:
1. An aerodynamic device for guiding airflow around a side mirror of a vehicle, the device comprising:
   the side mirror comprising a mirror surface, a cover and a support structure for mounting the cover to the vehicle at a mounting zone; and
   an aerodynamic body being movably attached to the side mirror, the aerodynamic body projecting from the side mirror, the aerodynamic body being actuatable between a first configuration and a second configuration, the first configuration of the aerodynamic body having a first angle of attack and the second configuration of the aerodynamic body having a second angle of attack, the first angle of attack being different to the second angle of attack.
2. The aerodynamic device according to statement 1, wherein the aerodynamic body is attached to the cover.
3. The aerodynamic device according to statement 1 or 2, wherein the support is structure attached to an inboard side of the cover and the aerodynamic body is attached to the inboard side of the cover.
4. The aerodynamic device according to any preceding statement, wherein the aerodynamic body projects in a direction away from the cover towards the mounting zone of the support structure.
5. The aerodynamic device according to any preceding statement, wherein a longitudinal axis of the aerodynamic body is parallel to a longitudinal axis of the support structure.
6. The aerodynamic device according to any preceding statement, wherein the first configuration of the aerodynamic body has a first downforce and/or drag characteristic, and the second configuration of the aerodynamic body has a second downforce and/or drag characteristic, the first downforce and/or drag characteristic being different to the second downforce and/or drag characteristic.
7. The aerodynamic device according to any preceding statement, wherein the aerodynamic body is rotatably attached to the side mirror at a joint, the joint permitting the aerodynamic body to rotate with respect to the side mirror about a rotation axis from the first configuration to the second configuration.
8. The aerodynamic device according to any preceding statement, wherein the aerodynamic body is not directly attached to the vehicle.
9. The aerodynamic device according to any of statements 1 to 7, wherein the aerodynamic body is directly rotatably attachable to the vehicle about a further joint, the further joint permitting the aerodynamic body to rotate with respect to the vehicle about the rotation axis from the first configuration to the second configuration.
10. The aerodynamic device according to any preceding statement, wherein the aerodynamic body is actuatable between a third configuration and a fourth configuration, the third configuration of the aerodynamic body being a deployed configuration and the fourth configuration of the aerodynamic body being a retracted configuration.
11. The aerodynamic device according to statement 10, wherein the third configuration is the same as the first configuration, the second configuration, or a configuration between the first configuration and the second configuration.
12. The aerodynamic device according to statement 10 or 11, wherein the aerodynamic body is actuatable from the third configuration to the fourth configuration in a direction towards the cover.
13. The aerodynamic device according to any of statements 10 to 12, wherein, when an incoming airflow is received by a front surface of the cover, in the third configuration the aerodynamic body is not located behind of the cover with respect to the incoming airflow, and in the fourth configuration the aerodynamic body is located at least partially behind the cover with respect to the incoming airflow.
14. The aerodynamic device according to statement 13, wherein, when the incoming airflow is received by the front surface of the cover, in the fourth configuration the aerodynamic body is located wholly behind the cover with respect to the incoming airflow.
15. The aerodynamic device according to any of statements 10 to 14, wherein the side mirror comprises a cavity, the cavity being inside the cover and the mirror surface, and wherein in the third configuration the aerodynamic body is located wholly outside of the cavity, and in the fourth configuration the aerodynamic body is located at least partially inside the cavity.
16. The aerodynamic device according to statement 15, wherein in the fourth configuration the aerodynamic body is located wholly inside the cavity.
17. The aerodynamic device according to any preceding statement, wherein the aerodynamic body comprises one or more of: an aerofoil cross section, a planar shape, a planform shape, a fin shape, a wing shape, or a winglet shape.
18. The aerodynamic device according to any preceding statement, wherein the aerodynamic device further comprises a driver, the driver being configured to drive the actuation of the aerodynamic body.
19. The aerodynamic device according to any preceding statement, wherein the cover is movably attached to the support structure, the cover being actuatable between a fifth configuration and a sixth configuration, the fifth configuration being a normal configuration and the sixth configuration being a folded configuration.
20. The aerodynamic device according to statement 19, wherein the fifth configuration of the aerodynamic body has a fifth downforce and/or drag characteristic, and the sixth configuration of the aerodynamic body has a sixth downforce and/or drag characteristic, the fifth downforce and/or drag characteristic being different to the sixth downforce and/or drag characteristic.
21. The aerodynamic device according to statement 19 or 20, wherein the cover is rotatably attached to the support structure at a cover joint, the cover joint permitting the cover to rotate with respect to the support structure about a cover rotation axis from the fifth configuration to the sixth configuration.
22. The aerodynamic device according to statement 21, wherein the cover rotation axis is perpendicular to the longitudinal axis of the support structure.
22. The aerodynamic device according to any preceding statement, wherein the aerodynamic device a comprises a plurality of aerodynamic bodies.
23. A vehicle comprising the aerodynamic device according to any preceding statement.
24. A vehicle according to statement 23, further comprising a further aerodynamic device according to any of statements 1 to 22, the aerodynamic device and the further aerodynamic device being configured for use on opposing sides of the vehicle respectively.
25. A control system configured to control the aerodynamic device of any of statements 1 to 22, the control system being configured to control the actuation of the aerodynamic body from the first configuration to the second configuration.
26. A control system for controlling an aerodynamic device for guiding airflow around a side mirror of a vehicle, the device comprising:
   the side mirror comprising a mirror surface, a cover and a support structure for mounting the cover to the vehicle at a mounting zone;
   an aerodynamic body being movably attached to the side mirror, the aerodynamic body projecting from the side mirror; and
   a driver configured to drive the actuation of the aerodynamic body;
   the control system being configured to control the driver to actuate the aerodynamic body between a first configuration and a second configuration, the first configuration of the aerodynamic body having a first angle of attack and the second configuration of the aerodynamic body having a second angle of attack, the first angle of attack being different to the second angle of attack.
27. The control system according to statement 26, wherein the control system is configured to actuate the aerodynamic body between the first configuration and the second configuration in response to receiving a reconfiguration request.
28. The control system according to statement 27, wherein the reconfiguration request corresponds to a road mode request, a track mode request, or a high-speed mode request.
29. The control system according to any of statements 26 to 28, wherein the control system is configured to adjust the actuation of the aerodynamic body in response to receiving driving data.
30. The control system according to statement 29, wherein the driving data comprises one or more of: telemetry data and user input data.
31. The control system according to any of statements 26 to 30, wherein the control system is configured to continuously adjust the actuation of the aerodynamic body.

End of description.

## Claims

1. An aerodynamic device for guiding airflow around a side mirror of a vehicle, the device comprising:
the side mirror comprising a mirror surface, a cover and a support structure for mounting the cover to the vehicle at a mounting zone; and
an aerodynamic body being movably attached to the side mirror, the aerodynamic body projecting from the side mirror, the aerodynamic body being actuatable between a first configuration and a second configuration, the first configuration of the aerodynamic body having a first angle of attack and the second configuration of the aerodynamic body having a second angle of attack, the first angle of attack being different to the second angle of attack.

2. The aerodynamic device according to claim 1, wherein the aerodynamic body is attached to the cover, and/or wherein the support is structure attached to an inboard side of the cover and the aerodynamic body is attached to the inboard side of the cover.

3. The aerodynamic device according to claim 1 or 2, wherein the aerodynamic body projects in a direction away from the cover towards the mounting zone of the support structure, and/or wherein a longitudinal axis of the aerodynamic body is parallel to a longitudinal axis of the support structure.

4. The aerodynamic device according to any preceding claim, wherein the first configuration of the aerodynamic body has a first downforce and/or drag characteristic, and the second configuration of the aerodynamic body has a second downforce and/or drag characteristic, the first downforce and/or drag characteristic being different to the second downforce and/or drag characteristic, and/or wherein the aerodynamic body is rotatably attached to the side mirror at a joint, the joint permitting the aerodynamic body to rotate with respect to the side mirror about a rotation axis from the first configuration to the second configuration.

5. The aerodynamic device according to any preceding claim, wherein the aerodynamic body is not directly attached to the vehicle, or alternatively wherein the aerodynamic body is directly rotatably attachable to the vehicle about a further joint, the further joint permitting the aerodynamic body to rotate with respect to the vehicle about the rotation axis from the first configuration to the second configuration.

6. The aerodynamic device according to any preceding claim, wherein the aerodynamic body is actuatable between a third configuration and a fourth configuration, the third configuration of the aerodynamic body being a deployed configuration and the fourth configuration of the aerodynamic body being a retracted configuration, optionally wherein the third configuration is the same as the first configuration, the second configuration, or a configuration between the first configuration and the second configuration.

7. The aerodynamic device according to claim 6, wherein the aerodynamic body is actuatable from the third configuration to the fourth configuration in a direction towards the cover.

8. The aerodynamic device according to claim 6 or 7, wherein, when an incoming airflow is received by a front surface of the cover, in the third configuration the aerodynamic body is not located behind of the cover with respect to the incoming airflow, and in the fourth configuration the aerodynamic body is located at least partially behind the cover with respect to the incoming airflow, optionally wherein, when the incoming airflow is received by the front surface of the cover, in the fourth configuration the aerodynamic body is located wholly behind the cover with respect to the incoming airflow.

9. The aerodynamic device according to any of claims 6 to 8, wherein the side mirror comprises a cavity, the cavity being inside the cover and the mirror surface, and wherein in the third configuration the aerodynamic body is located wholly outside of the cavity, and in the fourth configuration the aerodynamic body is located at least partially inside the cavity, optionally wherein in the fourth configuration the aerodynamic body is located wholly inside the cavity.

10. The aerodynamic device according to any preceding claim, wherein the aerodynamic body comprises one or more of: an aerofoil cross section, a planar shape, a planform shape, a fin shape, a wing shape, or a winglet shape, and/or wherein the aerodynamic device further comprises a driver, the driver being configured to drive the actuation of the aerodynamic body.

11. The aerodynamic device according to any preceding claim, wherein the cover is movably attached to the support structure, the cover being actuatable between a fifth configuration and a sixth configuration, the fifth configuration being a normal configuration and the sixth configuration being a folded configuration, optionally wherein the fifth configuration of the aerodynamic body has a fifth downforce and/or drag characteristic, and the sixth configuration of the aerodynamic body has a sixth downforce and/or drag characteristic, the fifth downforce and/or drag characteristic being different to the sixth downforce and/or drag characteristic.

12. The aerodynamic device according to claim 11, wherein the cover is rotatably attached to the support structure at a cover joint, the cover joint permitting the cover to rotate with respect to the support structure about a cover rotation axis from the fifth configuration to the sixth configuration, optionally wherein the cover rotation axis is perpendicular to the longitudinal axis of the support structure.

13. The aerodynamic device according to any preceding claim, wherein the aerodynamic device a comprises a plurality of aerodynamic bodies.

14. A vehicle comprising the aerodynamic device according to any preceding claim.

15. A control system for controlling an aerodynamic device for guiding airflow around a side mirror of a vehicle, the device comprising:
the side mirror comprising a mirror surface, a cover and a support structure for mounting the cover to the vehicle at a mounting zone;
an aerodynamic body being movably attached to the side mirror, the aerodynamic body projecting from the side mirror; and
a driver configured to drive the actuation of the aerodynamic body;
the control system being configured to control the driver to actuate the aerodynamic body between a first configuration and a second configuration, the first configuration of the aerodynamic body having a first angle of attack and the second configuration of the aerodynamic body having a second angle of attack, the first angle of attack being different to the second angle of attack.
